# EUROPEAN PATENT APPLICATION

(11) **EP 4 465 754 A1**
(43) Date of publication of application: **20.11.2024**
(21) Application number: 24175019.9
(22) Date of filing: 09.05.2024
(51) Int. Cl.: H04W 76/18, H04W 48/18

(54) **SYSTEM AND METHOD FOR HANDLING SESSION ESTABLISHMENT PROCEDURE ASSOCIATED WITH STAND-ALONE NON-PUBLIC NETWORKS**

(30) Priority: 15.05.2023 IN 202341034091; 25.04.2024 IN 202341034091
(71) Applicant: Samsung Electronics Co., Ltd., Suwon-si, Gyeonggi-do 16677 (KR)
(72) Inventor: TENSINGH, Shrinithi Andal, 560048 Bengaluru (IN); GANIG, Chetan Ramesh, 560048 Bengaluru (IN); DANDRA, Prasad Basavaraj, 560048 Bengaluru (IN); COMARAVELOU, Sivasankar, 560048 Bengaluru (IN); KUMAR, Lalith, Bangalore (IN); HASHMI, Danish Ehsan, Bangalore (IN); SINHA, Utsav, Bangalore (IN)
(74) Representative: Marks & Clerk LLP

(57) **Abstract**

A method of a user equipment (UE) for establishing a session with one or more Stand-alone Non-Public Networks (SNPNs) includes first sending a service request to a SNPN network entity while the UE is in an idle mode, monitoring a response to the service request based on a first timer and a counter, initiating a second timer in response to determining that the counter exceeds a threshold count, receiving an indication of a change in a current SNPN, or an update associated with a selected entry of the current SNPN, stopping the second timer, and second sending the service request to the SNPN network entity for connection with a new SNPN, or the current SNPN with the update, the second sending being performed in response to determining that the second timer has stopped, and the second sending being performed while the UE remains in the idle mode.

## Description

### TECHNICAL FIELD

Embodiments disclosed herein relate to communication networks, and more particularly to methods and systems for handling session establishment procedure associated with stand-alone non-public networks.

### BACKGROUND

In the domain of communication networks, there exist networks that are private and intended for non-public use. These networks are referred to as Non-Public Networks (NPNs). NPNs are intended for the use of a private entity such as an enterprise in order to keep information safe and secure within the private entity. NPNs may be deployed in a variety of configurations by utilizing both virtual and physical elements. For example, the NPNs may be hosted by Public Land Mobile Networks (PLMNs) or the NPNs may be offered as a slice of particular PLMNs.

In one configuration, the NPNs may be deployed as a Stand-alone Non-Public Network (SNPN). The SNPN may be operated by an NPN operator. The SNPN may not rely on network functions provided by the PLMNs or public network integrated NPNs (NPNs deployed with the support of PLMNs). A user equipment (UE) may support SNPNs and have subscriptions of one or more SNPNs. The UE may be provisioned with a list of subscriber data having the necessary (or sufficient) information to register with the SNPNs. Details regarding the selection of SNPN and the list of subscriber data are mentioned in 3rd Generation Partnership Project (3GPP) Section TS 23.122 4.9.3 "SNPN selection".

The UE may establish a Packet Data Unit (PDU) session with the SNPNs and may send the necessary (or proper) messages for the PDU session establishment. The PDU session may be for a specific type, such as IPv6 type, IPv4 type, IPv4v6 type, etc. In some cases, the UE may request a PDU session for a specific type, however, may receive a rejection message indicating that a different type is allowed for the PDU session. As an example, the UE may request PDU session type IPv6 but may receive a message with cause #50 indicating that only PDU session type IPv4 is allowed. As another example, the UE may request PDU session type IPv4v6 but may receive a message with cause #51 indicating that only PDU session type IPv6 is allowed. In such scenarios, as per the 3GPP standard, the UE is not allowed to subsequently request for another PDU session of the type different from the one allowed by network until one or more conditions are fulfilled. These conditions are mentioned in 3GPP section TS 24.501 6.4.1.3.

In particular scenarios, the PDU establishment with the session type not allowed previously is not tried again by the UE. Even though there may be a change in SNPN or an update in a selected entry in the list of subscriber data, the PDU establishment with the session type not allowed previously is never tried. That is PDU session establishment may not be allowed due to previously received rejection. As a result, there is a delay at the UE in getting services.

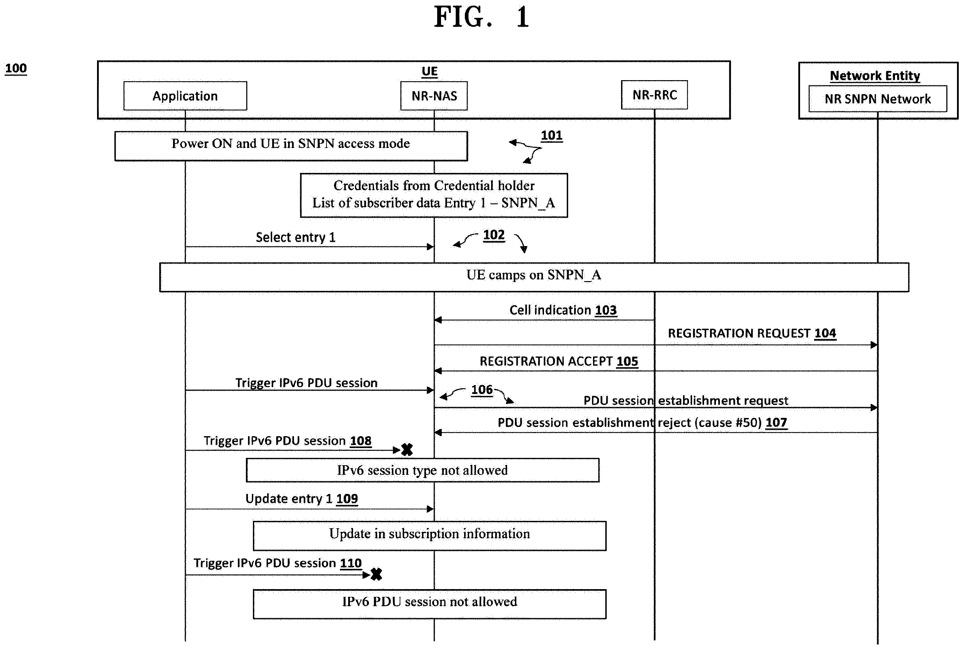

**FIG. 1** illustrates a process flow 100 depicting a conventional scenario where session establishment is rejected with cause #50. Initially, at operation 101, the UE may be powered on and operate in an SNPN access mode. The UE may have a list of subscriber data. At operation 102, one entry from the plurality of entries may be selected and UE may camp on an SNPN, say, SNPN_A. At operations 103-105, the UE may register with the SNPN network entity.

At operation 106, PDU session establishment may be triggered and the UE may send a first session establishment request associated with session type IPv6. At operation 107, a PDU session establishment reject message may be received with cause #50 - PDU session type IPv4 only allowed.

As the first response is indicative of session rejection, the UE does not allow establishment of the PDU session with the rejected type as shown by operation 108. That is, the UE does not further allow the establishment of PDU session type IPv6 or IPv4v6 as per the 3GPP standard. At operation 109, the list of subscriber data gets updated. For instance, the entry associated with the SNPN_A may be updated or operation 109 may also indicate a change in the current SNPN from SNPN_A and registration on another SNPN, say SNPN_B. At operation 110, PDU session establishment may be triggered for session type IPv6 however the process is not allowed by the UE due to the previously received reject cause #50. Thus, there is a delay in session establishment and accessing services or no access to the desired services.

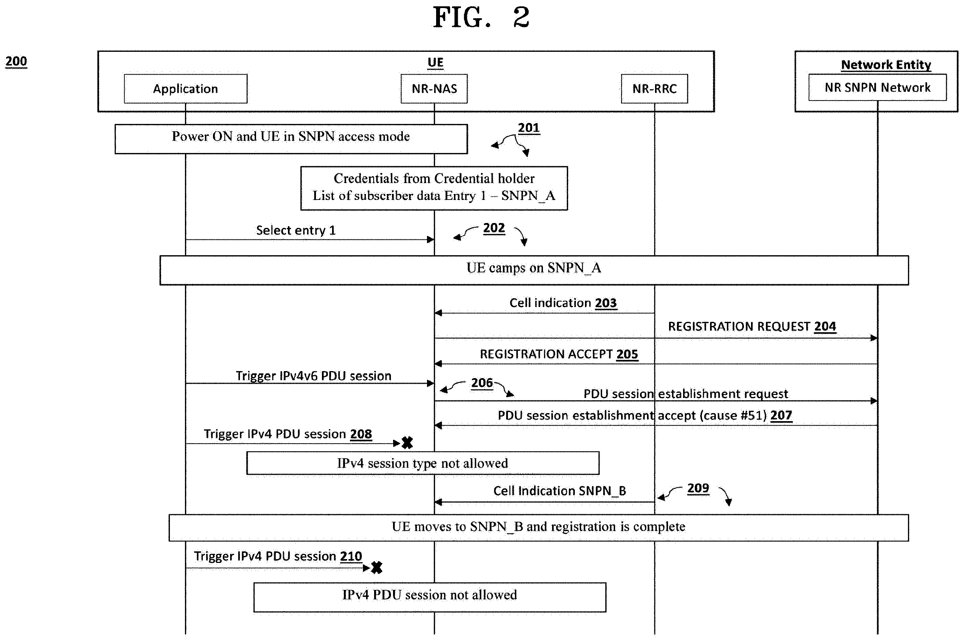

**FIG. 2** illustrates a process flow 200 depicting a conventional scenario where session establishment is accepted with cause #51. Initially, at operation 201, the UE may be powered on and operate in an SNPN access mode. The UE may have a list of subscriber data and may also support credentials from credentials holder. At operation 202, one entry from the plurality of entries may be selected and UE may camp on an SNPN, say, SNPN_A. At operations 203-205, the UE may register with the SNPN network entity.

At operation 206, PDU session establishment may be triggered and the UE may send a first session establishment request associated with session type IPv4v6. At operation 207, a PDU session establishment accept message may be received with cause #51 - PDU session type IPv6 only allowed.

In view of the message with cause #51, the UE does not allow establishment of the PDU session with the rejected type as shown by operation 208. That is, the UE does not further allow the establishment of PDU session type IPv4 or IPv4v6 as per the 3GPP standard. At operation 209, the UE moves to another SNPN, say, SNPN_B and registers with the SNPN_B or operation 209 may also indicate that the entry associated with the SNPN_A may be updated. At operation 210, PDU session establishment may be triggered for session type IPv4 however the process is not allowed by the UE due to the previously received reject cause #51. Thus, there is a delay in session establishment and accessing services or no access to the desired services.

Further, in cases where service requests are being sent by the UE when the UE is in idle mode, the UE may monitor whether the network is responding or not responding to the UE. In case the network does not respond to the UE for a threshold number of times, a timer T3525 is activated, and the UE is not allowed to send another service request till the timer T3525 is running. Details regarding the timer T3525 are mentioned in 3GPP section TS 24.501 10.2 "Timers of 5GS mobility management". In cases where UE moves to a new SNPN, the UE may be unable to send service requests since the timer T3525 may be running. As a result, there is a delay at the UE in getting services.

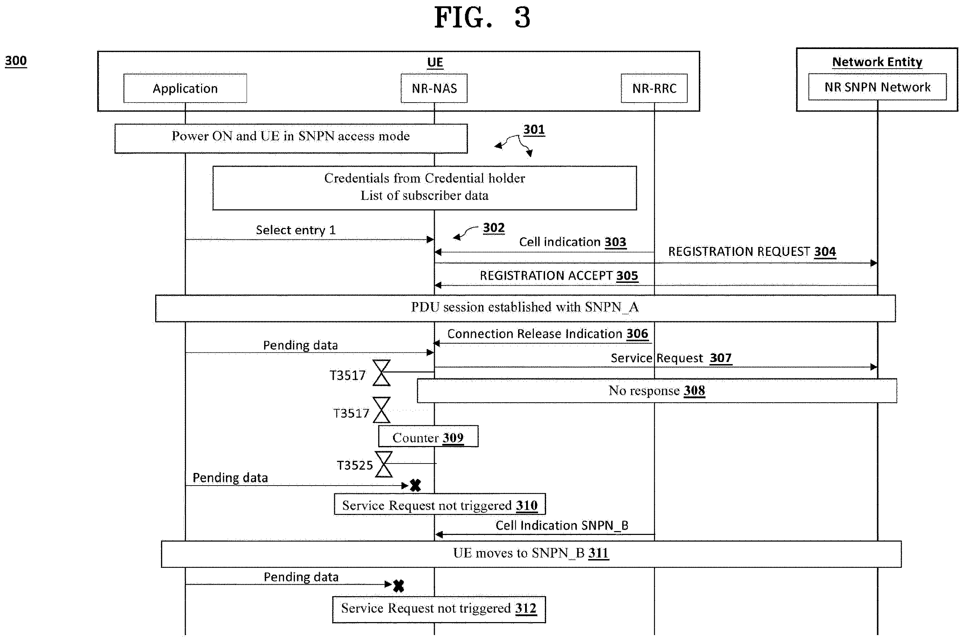

**FIG. 3** illustrates a process flow 300 depicting a conventional scenario when timer T3525 is running. Initially, at operations 301-305, the UE may be powered on and operate in an SNPN access mode. An entry from the list of subscriber data may be selected and the UE may register with an SNPN network entity for connection with an SNPN, say, SNPN_A.

At operation 306, the connection with the UE may be released and the UE may initiate service request procedure. At operation 307, a service request may be sent by the UE to the SNPN network entity and a timer T3517 may be started. At operation 308, the response to the service request may be monitored and it may be determined that no response is received. Once the timer T3517 expires, an attempt counter may be incremented at operation 309. The process of sending service requests may be repeated for a threshold number of times. Once the repetition is done for the threshold number of times, another timer T3525 may be started.

At operation 310, as the timer T3525 is running, the UE does not send any further service requests. At operation 311, the UE may receive a cell indication for another SNPN, say SNPN_B equivalent to SNPN_A and the UE may move to SNPN_B. Alternatively, at operation 311, the UE may receive an indication that the entry associated with the SNPN_A is updated. However, as the timer T3525 is still running, the UE does not send pending data and no further service requests are triggered, as depicted at operation 312. As a result, there is a delay at the UE in getting services.

Thus, it is desired to address the above-mentioned disadvantages or other shortcomings or at least provide a useful alternative to overcome the above-mentioned disadvantages.

### SUMMARY

This summary is provided to introduce a selection of concepts, in a simplified format, that are further described in the detailed description of the disclosure. This summary is neither intended to identify key or essential inventive concepts nor is it intended to determine the scope of the disclosure.

Disclosed herein is a method of a user equipment (UE) for establishing a session with one or more Stand-alone Non-Public Networks (SNPNs), the method includes first sending a service request (e.g. sending a first service request, or performing a first sending of a service request) to a SNPN network entity while the UE is in an idle mode, monitoring a response to the service request based on a first timer and a service request attempt counter, initiating a second timer in response to determining that the service request attempt counter exceeds a threshold count, receiving an indication indicative of one of a change in a current SNPN from among the one or more SNPNs, or an update associated with a selected entry of the current SNPN, the UE being associated with a list of subscriber data having a plurality of entries, stopping the second timer, and second sending the service request (e.g. sending a second service request, or performing a second sending of the service request) to the SNPN network entity for connection with a new SNPN from among the one or more SNPNs, or the current SNPN with the update associated the selected entry of the current SNPN, the second sending being performed in response to determining that the second timer has stopped, and the second sending being performed while the UE remains in the idle mode before the UE switches to a connected mode.

Disclosed herein is a method of a user equipment (UE) for establishing a session with one or more Stand-alone Non-Public Networks (SNPNs), the method includes switching, by the UE, to a connected mode in connection with a current SNPN from among the one or more SNPNs, the UE being associated with a list of subscriber data having a plurality of entries, at least one entry among the plurality of entries including one or more SNPN identifiers, and the current SNPN being included in the at least one entry, sending, by the UE, a first session establishment request to a SNPN network entity associated with the one or more SNPNs, the first session establishment request being associated with a first session type, receiving, by the UE, a first response from the SNPN network entity, the first response being indicative of a session rejection by the current SNPN for the first session type, detecting, by the UE, one of a change in the current SNPN from among the one or more SNPNs, or an update associated with a selected entry of the current SNPN, and triggering, by the UE, a second session establishment request in response to detecting the update associated with the selected entry, the second session establishment request being associated with the first session type.

Also disclosed herein is a system of a user equipment (UE) for establishing a session with one or more Stand-alone Non-Public Networks (SNPNs), the system includes processing circuitry configured to first send a service request to a SNPN network entity while the UE is in an idle mode, monitor a response to the service request based on a first timer and a service request attempt counter, initiate a second timer in response to determining that the service request attempt counter exceeds a threshold count, receive an indication indicative of one of a change in a current SNPN from among the one or more SNPNs, or an update associated with a selected entry of the current SNPN, the UE being associated with a list of subscriber data having a plurality of entries, stop the second timer, and second send the service request to the SNPN network entity for connection with a new SNPN from among the one or more SNPNs, or the current SNPN with the update associated with the selected entry of the current SNPN, the service request being second sent in response to determining that the second timer has stopped, and the service request being second sent while the UE remains in the idle mode before the UE switches to a connected mode.

Also disclosed herein is a system of a user equipment (UE) for establishing a session with one or more Stand-alone Non-Public Networks (SNPNs), the system includes processing circuitry configured to switch the UE to a connected mode in connection with a current SNPN from among the one or more SNPNs, the UE being associated with a list of subscriber data having a plurality of entries, at least one entry among the plurality of entries including one or more SNPN identifiers, and the current SNPN being included in the at least one entry, send a first session establishment request to a SNPN network entity associated with the one or more SNPNs, the first session establishment request being associated with a first session type, receive a first response from the SNPN network entity, the first response being indicative of a session rejection by the current SNPN for the first session type, detect one of a change in the current SNPN from among the one or more SNPNs, or an update associated with a selected entry of the current SNPN, and trigger a second session establishment request in response to detecting the update associated with the selected entry, the second session establishment request being associated with the first session type.

At least some of the above and other features of the invention are set out in the claims. To further clarify the advantages and features of the present disclosure, a more particular description of the disclosure will be rendered by reference to specific examples thereof, which is illustrated in the appended drawing. It is appreciated that these drawings depict only typical examples of the disclosure and are therefore not to be considered limiting its scope. The disclosure will be described and explained with additional specificity and detail with the accompanying drawings.

### BRIEF DESCRIPTION OF FIGURES

These and other features, aspects, and advantages of the present disclosure will be understood better when the following detailed description is read with reference to the accompanying drawings in which like characters represent like parts throughout the drawings, wherein:
FIG. 1 illustrates a process flow depicting a conventional scenario where session establishment is rejected with cause #50, according to prior art;
FIG. 2 illustrates a process flow depicting a conventional scenario where cause #51 is received during session establishment, according to prior art;
FIG. 3 illustrates a process flow depicting a conventional scenario when timer T3525 is running, according to prior art;
FIG. 4 illustrates a block diagram of a communication environment depicting a configuration of a SNPN network entity and a UE, in accordance with embodiments of the present disclosure;
FIG. 5 illustrates a process for handling session establishment procedure of the UE with one or more SNPNs, in accordance with embodiments of the present disclosure;
FIG. 6 illustrates another process for handling session establishment procedure of the UE with one or more SNPNs, in accordance with embodiments of the present disclosure;
FIG. 7 illustrates another process for handling session establishment procedure of the UE with one or more SNPNs, in accordance with embodiments of the present disclosure; and
FIGS. 8-9 illustrate method flow charts depicting methods for handling session establishment procedure, in accordance with embodiments of the present disclosure.

### DETAILED DESCRIPTION

For the purpose of promoting an understanding of the principles of the disclosure, reference will now be made to embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

The term "some" or "one or more" as used herein is defined as "one", "more than one", or "all." Accordingly, the terms "more than one," "one or more" or "all" would all fall under the definition of "some" or "one or more". The terms "an embodiment", "another embodiment", "some embodiments", or "in one or more embodiments" may refer to one embodiment, several embodiments, or all embodiments. Accordingly, the term "embodiments" is defined as meaning "one embodiment, or more than one embodiment, or all embodiments."

The terminology and structure employed herein are for describing, teaching, and illuminating embodiments and their specific features and elements and do not limit, restrict, or reduce the scope of the claims or their equivalents. The phrase "exemplary" may refer to an example.

More specifically, any terms used herein such as but not limited to "includes," "comprises," "consisting," "has," and "have" and grammatical variants thereof do not specify an exact limitation or restriction and certainly do not exclude the possible addition of one or more features or elements, unless otherwise stated, and must not be taken to exclude the possible removal of one or more of the listed features and elements unless otherwise stated with the limiting language "must comprise" or "needs to include".

Whether or not a certain feature or element was limited to being used only once, either way, it may still be referred to as "one or more features", "one or more elements", "at least one feature", or "at least one element." Furthermore, the use of the terms "one or more" or "at least one" feature or element does not preclude there being none of that feature or element unless otherwise specified by limiting language such as "there needs to be one or more" or "one or more element is required."

Unless otherwise defined, all terms, and especially any technical and/or scientific terms, used herein may be taken to have the same meaning as, or a similar meaning to, that commonly understood by one having ordinary skill in the art.

Embodiments of the present disclosure will be described below in detail with reference to the accompanying drawings.

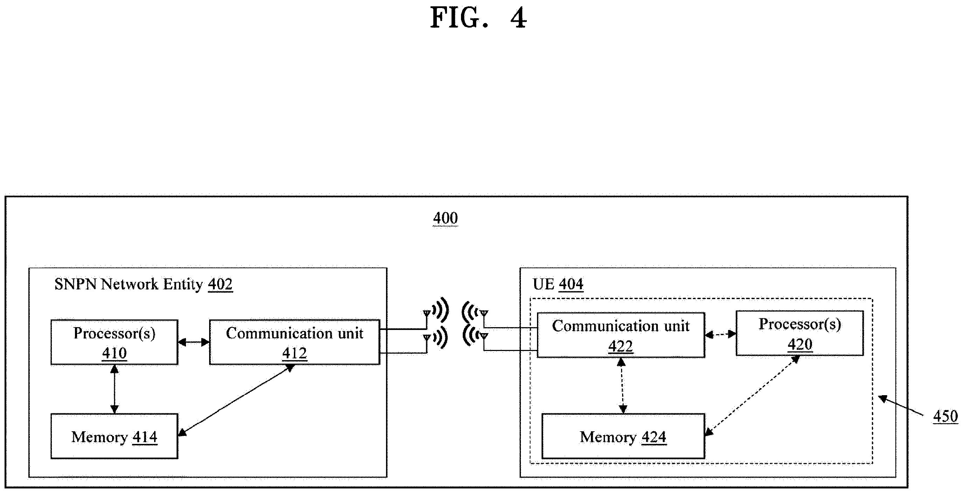

**FIG. 4** illustrates an example block diagram of a communication environment 400 depicting a configuration of a Stand-alone Non-Public Network (SNPN) network entity 402 and a user equipment (UE) 404, according to embodiments disclosed herein. The configurations as disclosed in FIG. 4 may be understood as parts of the configuration of the SNPN network entity 402 and the user equipment 404. Hereinafter, it is understood that terms including "unit" or "module" at the end may refer to the unit for processing at least one function or operation and may be implemented in hardware, software, or a combination of hardware and software.

Referring to FIG. 4, the SNPN network entity 402 may be associated with one or more SNPNs. The SNPN network entity 402 may include one or more processor(s) 410 (also, referred to as processor 410), a communication unit 412 (e.g., communicator or communication interface), and/or a storage unit (e.g., memory 414). The communication unit 412 may perform functions for transmitting and receiving signals.

As an example, the processor 410 may be a single processing unit or a number of units, all of which could include multiple computing units. The processor 410 may be implemented as one or more microprocessors, microcomputers, microcontrollers, digital signal processors, central processing units, state machines, logic circuitries, and/or any devices that manipulate signals based on operational instructions. Among other capabilities, the processor 410 is configured to fetch and execute computer-readable instructions and data stored in the memory. The processor 410 may include one or a plurality of processors. The one or a plurality of processors 410 may be a general-purpose processor, such as a central processing unit (CPU), an application processor (AP), or the like, and/or an AI-dedicated processor such as a neural processing unit (NPU). The processor 410 may control the processing of input data in accordance with a predefined (or alternatively, given) operating rule or artificial intelligence (AI) model stored in the non-volatile memory and the volatile memory, e.g., the memory 414. The predefined (or alternatively, given) operating rule or artificial intelligence model is provided through training or learning.

The memory 414 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

In embodiments, the SNPN network entity 402 may be implemented as dedicated hardware units (e.g., one or more servers, one or more base stations, one or more access points, one or more PLMNs, etc.). In embodiments, the SNPN network entity 402 may be implemented in the form of virtualized software units in hardware or cloud environments.

Further, the user equipment (UE) 404 may also include one or more processor(s) 420 (also, referred to as processor 420), a communication unit 422 (e.g., communicator or communication interface), and/or a storage unit (e.g., memory 424). The communication unit 422 may perform functions for transmitting and receiving signals. The functionalities and features of the processor 420, communication unit 422, and memory 424 may be similar to those of the processor 410, communication unit 412, and memory 414, respectively. Therefore, a detailed explanation of the same is omitted herein for the sake of brevity of the present disclosure.

In embodiments, the UE 404 may include an application unit, a New-Radio Non-Access Stratum (NR-NAS) unit, and/or a New-Radio Radio Resource Control (NR-RRC) unit. The application unit may be configured to act as an abstraction layer at the UE 404 which handles the user inputs and provides the appropriate commands to the protocol stack. The NR-NAS unit may be configured to control the Non-Access Stratum (NAS) functionalities including but not limited to mobility management and session management at the UE 404. The NR-RRC unit may be configured to manage Access-Stratum (AS) functionalities of the UE 404 including but not limited to connection establishment and release, reading broadcast system information, cell selection, reselection, radio bearer management, etc. In embodiments, the SNPN network entity 402 may include a New-Radio SNPN network unit. The SNPN network is a private network which does not rely on network functions offered by a Public Land Mobile Network (PLMN) and provides services to the UEs which are subscribed to the SNPN network.

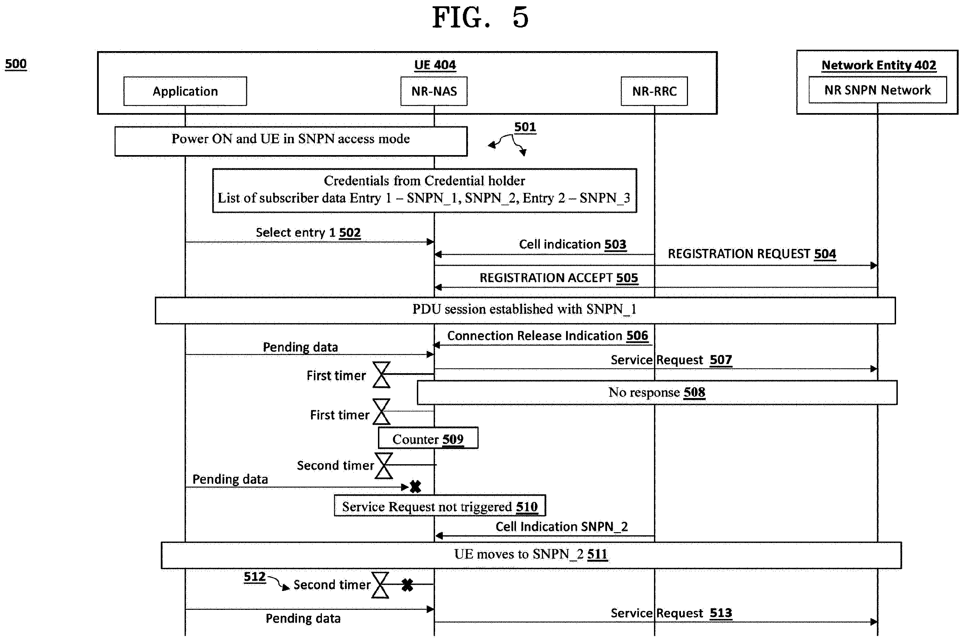

In embodiments, the user equipment 404 may be associated with a system 450 comprising at least the processor 420 and the memory 424 (e.g., the at least one processor 420 and the memory 424 may collectively be referred to as the system 450). The memory 414 may include executable instructions that, when executed by the processor, cause the system to perform the operations as described with reference to FIGS. 5-9. Further, the system 450 may be in communication with the SNPN network entity 402 to perform the operations as described with reference to FIGS. 5-9.

The method disclosed herein provides various technical advantages and benefits such as to ensure that the UE is able to attempt PDU session establishment of desired types on change to a new SNPN, or an update in SNPN parameters in the list of subscriber data associated with a current SNPN, irrespective of the results of previous PDU establishment requests (when in connected mode) or the results of previous service requests (when in idle mode and failed for threshold count). As a result, delays in accessing services are prevented (or reduced) and scenarios where UE would be without required (or requested) services are eliminated (or reduced).

In embodiments, the UE 404 may be configured to switch between an idle mode and a connected mode. In the idle mode, the UE 404 may not actively communicate with the one or more SNPNs and may be in a stand-by state. In the idle mode, the UE 404 may listen periodically to network information. In the connected mode, the UE 404 may actively communicate with the one or more SNPNs and may have established a connection with the SNPN network entity 402.

The UE 404 may be associated with a list of subscriber data which has a plurality of entries. The plurality of entries may include one or more SNPN identifiers for the one or more SNPNs. The UE 404 may support access to an SNPN using credentials from a credentials holder. The credentials holder refers to an entity which authenticates and authorizes access to an SNPN separate from the credentials holder. The list of subscriber data may be associated with one or more SNPN parameters provided the UE 404 supports access to an SNPN using credentials from a credentials holder. According to embodiments, "preferred SNPNs" as referenced herein may refer to specified and/or prioritized SNPNs. Details regarding the list of subscriber data are mentioned in 3GPP Section TS 23.122 4.9.3. In non-limiting examples, the one or more SNPN parameters may include:
(a) an identifier associated with the UE 404. The subscriber identifier may be in the form of a Subscription Permanent Identifier (SUPI) with SUPI format `network specific identifier' containing a network specific identifier or with SUPI format 'IMSI' containing International Mobile Subscriber Identity (IMSI).
(b) UE Route Selection Policy (USRP) rules. The USRP rules may include zero or more sets of pre-configured USRP rules, each set for the subscribed SNPN or a non-subscribed SNPN, as per 3GPP TS 24.526.
(c) an SNPN identity of a subscribed SNPN (also referred to as current SNPN).
(d) default configured Network Slice Selection Assistance Information (NSSAI) as per 3GPP TS 24.501.
(e) a user controlled prioritized list of preferred SNPNs, where each entry may contain an SNPN identity.
(f) a credentials holder controlled prioritized list of preferred SNPNs, where each entry may contain an SNPN identity.
(g) a credentials holder controlled prioritized list of Group identifiers (IDs) for Network Selection (GINs).
(h) access control configurations.
(i) credentials for authentication and key agreement procedures.

In an example, the list of subscriber data with credentials holder support may be as shown in Table 1:

**Table 1**

| Entry | SNPN ID | Preferred SNPN List |
|---|---|---|
| 1 | SNPN_1 | SNPN_A, SNPN_B |
| 2 | SNPN_3 | SNPN_C, SNPN_D |
| 3 | SNPN_A | <empty> |

As another example, the list of subscriber data without credentials holder support may be as shown in Table 2:

**Table 2**

| Entry | SNPN ID | <No Credentials Holder Support> |
|---|---|---|
| 1 | SNPN_1 | <empty> |
| 2 | SNPN_2 | <empty> |

**FIG. 5** illustrates a process 500 for handling session establishment procedure of the UE 404 with one or more SNPNs. The one or more SNPNs may be associated with the SNPN network entity 402.

Initially, at operation 501, the UE 404 may be powered on and operate in an SNPN access mode. The UE 404 may support credentials from a credentials holder, as described above. In the list of subscriber data, SNPN_1 may be at entry 1. At operation 502, the entry 1 from the list of subscriber data may be selected (e.g., by the UE 404 and/or a user of the UE 404) and the UE 404 may register with the SNPN network entity 402 for connection with SNPN_1 through the operations 503-505. At operations 503-505, the UE 404 may receive a cell indication (in operation 503), and the UE 404 may register with the SNPN network entity 402 by sending a registration request (in operation 504) and receiving a registration accept message from the SNPN network entity 402 (in operation 505). The registration may be complete with SNPN_1 and a PDU session may be established.

At operation 506, the SNPN network entity 402 may release the connection with the UE 404 and the UE 404 may enter the idle mode.

The service request procedure may now be initiated, and pending data may be sent by the UE 404. At operation 507, a service request may be sent by the UE 404 to the SNPN network entity 402, and a first timer may be started. The response to the service request may be monitored based on the first timer. In embodiments, the first timer is T3517 (e.g. according to 3GPP TS 24.501). At operation 508, no response may be received by the UE 404 from the SNPN network entity 402 in response to the service request. At operation 509, the first timer, e.g., T3517 may expire, and an attempt counter may be incremented to track the number of times the service request has been attempted by the UE 404.

The operations 507-509 may be repeated till the attempt counter reaches a threshold count. In embodiments, the threshold count may be 5. For instance, the first timer may be restarted upon a determination that no response is received from the SNPN network entity at an expiry of the first timer. The service request attempt counter may be repeatedly incremented to track the number of times the service request has been attempted by the UE 404.

Once the attempt counter reaches the threshold count, a second timer may be started. While the second timer is running (prior to expiry of the second timer), any further service requests may not be sent by the UE 404 to the SNPN network entity 402. That is, no service request is triggered for service other than high priority access, Emergency or in response to Paging while the second timer is running as shown by operation 510. In embodiments, the second timer is T3525. According to embodiments, each of the first timer and the second timer may each be initialized to have a fixed (or alternatively, given) value. Upon being started (e.g., by the UE 404), each of the first timer and the second timer counts down until expiry (e.g., until the fixed or alternatively, given value of the first or second timer reaches zero). The first timer may have a different value from the second timer.

At operation 511, the UE 404 may receive a cell indication for another SNPN, e.g., SNPN_2 and the UE may move to SNPN_2. The SNPN_2 may be equivalent (or similar) to the SNPN_1. In embodiments, an equivalent SNPNs list is provided by the registered SNPN where UE mobility between the SNPNs is supported in CONNECTED mode. The SNPNs in the equivalent SNPNs list are regarded by the UE as equivalent to each other for SNPN selection, cell selection, and cell re-selection. The UE 404 may successfully register with the SNPN network entity 402 for connecting with the SNPN_2. That is, a change in a current SNPN (in this case, SNPN_1) indicative through receiving a cell indication or an update associated with a selected entry of the current SNPN (in this case, SNPN_1) may be received at the UE 404.

As there is a change in the SNPN, at operation 512, the second timer, e.g., timer T3525 is stopped by the UE 404. According to embodiments, the UE 404 may stop the second timer before the second timer expires in response to determining the change in the SNPN (e.g., that a current SNPN has changed or an entry associated with a current SNPN has been updated). Further, as the timer T3525 is now stopped and not running, the UE 404 may proceed to send pending data, and further, send a service request to the SNPN network entity 402 at operation 513. Thus, the UE 404 may connect with the new SNPN (in this case, SNPN_2) to avail the services. As the timer T3525 is stopped on camping on to a new SNPN (SNPN_2) other than the one in which the timer T3525 was started (SNPN_1), the UE 404 is enabled to avail all services from the SNPN network entity 402 which would not have been possible as per existing standards (as described with reference to FIG. 3). According to embodiments, the UE 404 may remain in the idle mode through operations 507, 508, 509, 510, 511, 512 and/or 513, and may enter the connected mode upon connecting with the new SNPN to avail the services. According to embodiments, the UE 404 may perform communication via the new SNPN to which the UE 404 has connected (e.g., availing the services). For example, the UE 404 may generate a communication signal, process the communication signal (e.g., modulating, upconverting, amplifying, etc.) and transmit the communication signal to an external device (e.g., another UE 404, a server, etc.). Also, the UE 404 may receive a communication signal from the external device, and process the communication signal (e.g., amplifying, downconverting, demodulating, etc.).

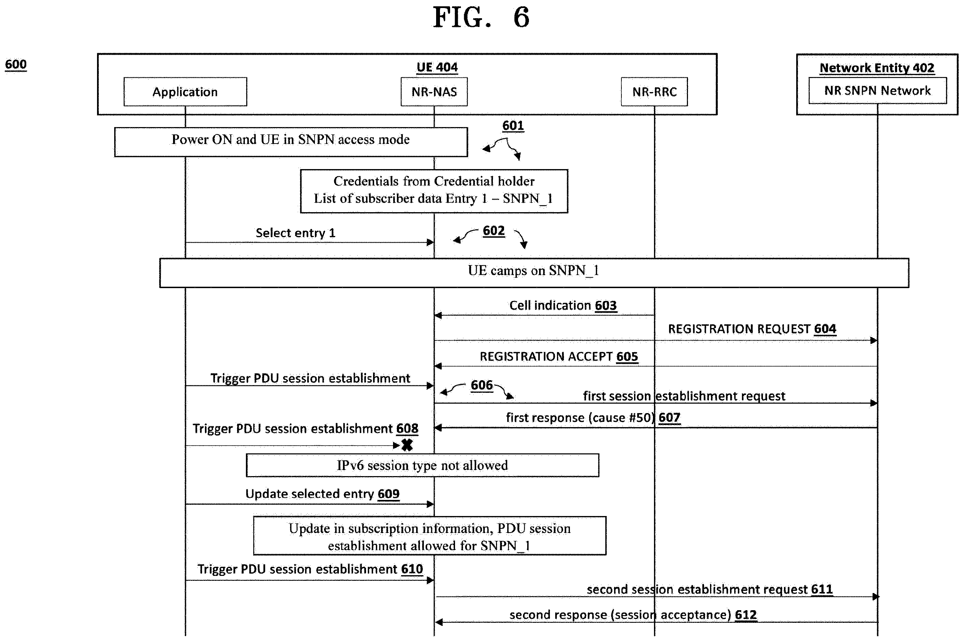

**FIG. 6** illustrates a process 600 for handling session establishment procedure of the UE 404 with one or more SNPNs, in accordance with embodiments of the present disclosure. The one or more SNPNs may be associated with the SNPN network entity 402. Although a single SNPN network entity 402 is depicted, it is appreciated that there may be multiple SNPN network entities 402 without departing from the scope of the inventive concepts.

Initially, at operation 601, the UE 404 may be powered on and operate in an SNPN access mode. The UE 404 may have a list of subscriber data and may also support credentials from a credentials holder, as described above. As an example, the list of subscriber data may include plurality of entries with SNPN identifiers, SUPI, credentials, access control configurations, USRP rules, etc.

At operation 602, one entry from the plurality of entries may be selected (e.g., by the UE 404 and/or a user of the UE 404). For instance, entry 1 may be selected in the list of subscriber data which may be associated with SNPN_1. The UE 404 may camp onto SNPN_1. The SNPN_1 may be referred to as current SNPN in the illustrated example. At operations 603-605, the UE 404 may receive a cell indication (in operation 603), and the UE 404 may register with the SNPN network entity 402 by sending a registration request (in operation 604) and receiving a registration accept message from the SNPN network entity 402 (in operation 605). In embodiments, the UE 404 may switch from the idle mode to the connected mode in connection with the SNPN_1.

At operation 606, PDU session establishment may be triggered, and the UE 404 may send a first session establishment request (e.g., a first PDU session establishment request) to the SNPN network entity 402. The first session establishment request may be associated with a first session type. As an example, the first session establishment request may be associated with IPv6 PDU type with Data Network Name (DNN): DNN_A.

At operation 607, the UE 404 may receive a first response from the SNPN network entity 402. The first response may be indicative of a session rejection by the current SNPN (in this case, SNPN_1) for the first session type (in this case IPv6). In embodiments, the first response may be a PDU session establishment reject message. In embodiments, the first response may be associated with value #50 "PDU session type IPv4 only allowed." As the first response is indicative of session rejection, the UE 404 does not allow establishment of the PDU session with the rejected type, for instance IPv6 type or IPv4v6 type, as shown by operation 608. Accordingly, PDU session with type IPv6 is not allowed for DNN_A.

At operation 609, the list of subscriber data associated with the UE 404 is updated. For instance, a Subscription Permanent Identifier (SUPI) or credentials, or URSP rules are updated. In embodiments, the update is for the selected entry (here, entry 1) from the list of subscriber data which is related to the current SNPN (here, SNPN_1). In embodiments, a specific entry (here, entry 1) may be selected in accordance with implementation specific means. In embodiments, the selection of a specific entry may be based on multiple factors including, but not limited to, pre-defined methods, operator specific requirements, available SNPNs in the communication environment, etc. Upon the list of subscriber data being updated, the UE 404 may request for PDU session establishment. For instance, the UE 404 may request for PDU session for DNN_A and SNPN_1. Alternatively, at operation 609, upon receiving an indication of the UE 404 moving to another SNPN, say SNPN_2 (e.g., changing the previous current SNPN, that being SNPN_1, to the new current SNPN, that being SNPN_2), the UE 404 may request for PDU session establishment after completion of Registration procedure on the new SNPN (here, SNPN_2). For instance, the UE 404 may request for PDU session for DNN_A and SNPN_2. According to embodiments, the UE 404 moving to another SNPN may include disconnecting from the previous current SNPN (e.g., SNPN_1) and connecting to the new current SNPN (e.g., SNPN_2).

At operation 610, the PDU session establishment may be triggered and at operation 611, the UE 404 may send a second session establishment request to the SNPN network entity 402. In embodiments, the second session establishment request may be sent for connection with the current SNPN (here, SNPN_1). The second session establishment request may be associated with the first session type that was rejected in the first response in previous operations. For instance, the UE 404 may send the PDU session establishment request for the PDU session type IPv6 though it was rejected in the previous attempt for the same session type. In spite of receiving cause #50 "PDU session type IPv4 only allowed", the UE is now allowed to request the same PDU session type IPv6 among the available types IPv4, IPv6, and IPv4v6 which is different from the only PDU session type previously indicated as allowed in that SNPN, on the event of an update in the selected entry of the list of subscriber data or change in the current SNPN.

At operation 612, the UE 404 receives a second response from the SNPN network entity 402. The second response may be indicative of session acceptance for the first session type (here, IPv6 type). In embodiments, the second response may be a PDU session establishment accept message from the SNPN network entity 402. Thus, the PDU session is successfully established as the UE may request PDU sessions of type that is different from the one allowed by the SNPN network entity if the UE registers to a new SNPN other than the one in which the reject cause was received. According to embodiments, the UE 404 may perform communication via the SNPN to which the UE 404 has connected (e.g., via the PDU session). For example, the UE 404 may generate a communication signal, process the communication signal (e.g., modulating, upconverting, amplifying, etc.) and transmit the communication signal to an external device (e.g., another UE 404, a server, etc.). Also, the UE 404 may receive a communication signal from the external device, and process the communication signal (e.g., amplifying, downconverting, demodulating, etc.).

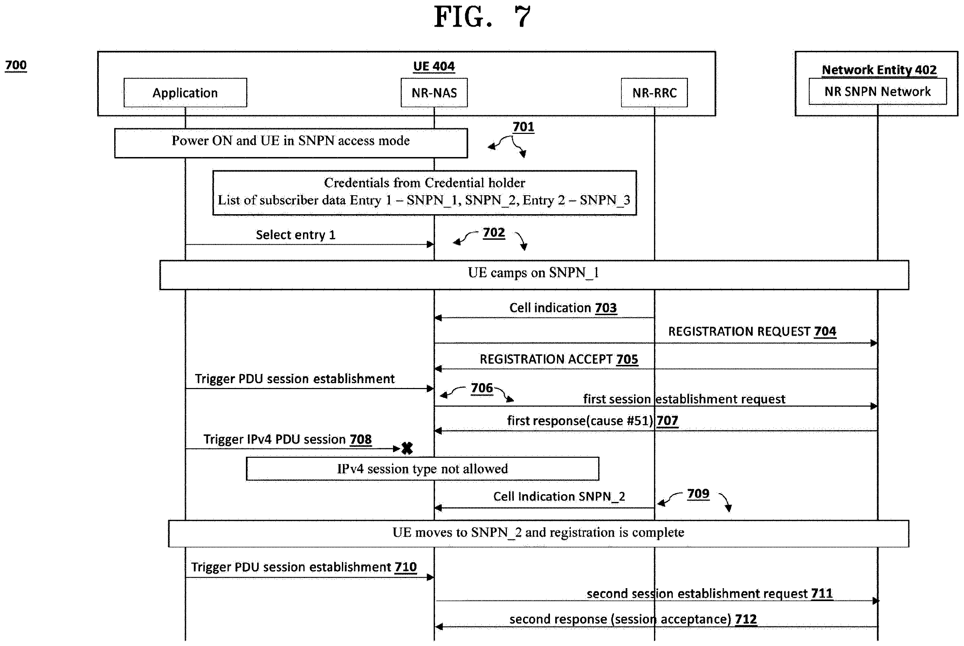

**FIG. 7** illustrates a process 700 for handling session establishment procedure of the UE 404 with one or more SNPNs, in accordance with embodiments of the present disclosure. The one or more SNPNs may be associated with the SNPN network entity 402. Although a single SNPN network entity 402 is depicted, it is appreciated that there may be multiple SNPN network entities 402 without departing from the scope of the inventive concepts.

Initially, at operation 701, the UE 404 may be powered on and operate in an SNPN access mode. The UE 404 may have a list of subscriber data and may also support credentials from credentials holder, as described above. As an example, the list of subscriber data may include entry 1 for SNPN_1 and SNPN_2 and entry 2 for SNPN_3.

At operation 702, one entry from the plurality of entries may be selected (e.g., by the UE 404 and/or a user of the UE 404). For instance, entry 1 may be selected in the list of subscriber data. The UE 404 may camp onto SNPN_1. The SNPN_1 may be referred to as current SNPN in the illustrated example. At operations 703-705, the UE 404 may receive a cell indication (in operation 703), and the UE 404 may register with the SNPN network entity 402 by sending a registration request (in operation 704) and receiving a registration accept message from the SNPN network entity 402 (in operation 705). In embodiments, the UE 404 may switch from the idle mode to the connected mode in connection with the SNPN_1.

At 706, PDU session establishment may be triggered, and the UE 404 may send a first session establishment request to the SNPN network entity 402. The first session establishment request may be associated with a first session type. As an example, the first session establishment request may be associated with IPv4v6 PDU type with Data Network Name (DNN): DNN_A.

At operation 707, the UE 404 may receive a first response from the SNPN network entity 402. The first response may be indicative of a session rejection by the current SNPN (in this case, SNPN_1) for the first session type (in this case IPv4v6). In embodiments, the first response may be a PDU session establishment accept message for activating PDU session with PDU Type IPv6. In embodiments, the first response may be associated with value #51 "PDU session type IPv6 only allowed." As the first response is indicative of session rejection for the requested session type (here, IPv4v6), the UE 404 does not allow establishment of the PDU session with the rejected type, for instance IPv4 type or IPv4v6 type as shown by operation 708. Accordingly, PDU session with type IPv4 is not allowed for DNN_A, SNPN_1.

At operation 709, the current SNPN (here, SNPN_1) associated with the UE 404 is updated. For instance, the UE 404 may move to SNPN_2 and complete registration with the SNPN network entity 402 for the new SNPN, e.g., SNPN_2. In embodiments, the new SNPN (SNPN_ 2) may belong to the same entry as (or a similar entry to) the current SNPN (SNPN_1). Upon the change in SNPN, the UE 404 may request for PDU session establishment. For instance, the UE 404 may request for PDU session for DNN_A and SNPN_2. Alternatively, at operation 709, upon receiving an indication of an update associated with a selected entry of the current SNPN (in this case, SNPN_1), the UE 404 may request for PDU session establishment. For instance, the UE 404 may request for PDU session for DNN_A and SNPN_1. In embodiments, a specific entry (here, SNPN 1) may be selected in accordance with implementation specific means. In embodiments, the selection of a specific entry may be based on multiple factors including, but not limited to, pre-defined methods, operator specific requirements, available SNPNs in the communication environment, etc.

At operation 710, the PDU session establishment may be triggered and at operation 711, the UE 404 may send a second session establishment request to the SNPN network entity 402. In embodiments, the second session establishment request may be sent for connection with the new SNPN (here, SNPN_2). The second session establishment request may be associated with the rejected session type. For instance, the UE 404 may send the PDU session establishment request for the PDU session type IPv4 or IPv4v6.

At operation 712, the UE 404 receives a second response from the SNPN network entity 402. The second response may be indicative of session acceptance for the rejected session type (for instance, IPv4 or IPv4v6 type). In embodiments, the second response may be a PDU session establishment accept message from the SNPN network entity 402. Thus, the PDU session is successfully established as the UE may request PDU sessions of type that is different from the one allowed by the SNPN network entity if the UE registers to a new SNPN other than the one in which the reject cause was received. According to embodiments, the UE 404 may perform communication via the new SNPN to which the UE 404 has connected (e.g., via the PDU session). For example, the UE 404 may generate a communication signal, process the communication signal (e.g., modulating, upconverting, amplifying, etc.) and transmit the communication signal to an external device (e.g., another UE 404, a server, etc.). Also, the UE 404 may receive a communication signal from the external device, and process the communication signal (e.g., amplifying, downconverting, demodulating, etc.).

In embodiments, the first response may be associated with value #57 "PDU session type IPv4v6 only allowed". In embodiments, the first response may be associated with value #58 "PDU session type Unstructured only allowed". In embodiments, the first response may be associated with value #61 "PDU session type Ethernet only allowed".

In embodiments, the first session type (and/or all session types discussed herein namely IPv4, IPv6, IPv4v6) may be associated with one of the PDU type, or a Session and Service Continuity (SSC) type. The term `session type' may refer to different protocols being used for communication and defining how data is addressed, routed, and transmitted. In non-limiting examples, the session types may include IPv4, IPv6, and IPv4v6. In embodiments, the first response may be a PDU session establishment reject message associated with cause #68 "not supported SSC mode". In such scenarios, the UE may request PDU sessions of type that is different from the allowed SSC mode by the SNPN network entity if the UE registers to a new SNPN other than the one in which the reject cause was received or if there is an update associated a selected entry of the current SNPN.

In embodiments, the UE is enabled to request PDU sessions of a type that is different from the one allowed by the SNPN network entity if the UE supports access to an SNPN using credentials from credential holder when the current SNPN is associated with:
- an entry of the list of subscriber data and the entry is updated, or
- the PLMN subscription and a Universal Subscriber Identity Module (USIM) is removed.

In embodiments, the UE is enabled to request PDU sessions of type that is different from the one allowed by the SNPN network entity if the UE registers to a new SNPN other than the one in which the reject cause was received.

In embodiments, the UE is enabled to request PDU sessions of type that is different from the one allowed by the SNPN network entity when the USIM associated with the UE is removed if:
- Extensible Authentication Protocol (EAP) based primary authentication and key agreement procedure using the EAP-AKA was performed in the selected SNPN, or
- the 5G Authentication and Key Agreement (AKA) based primary authentication and key agreement procedure was performed in the selected SNPN.

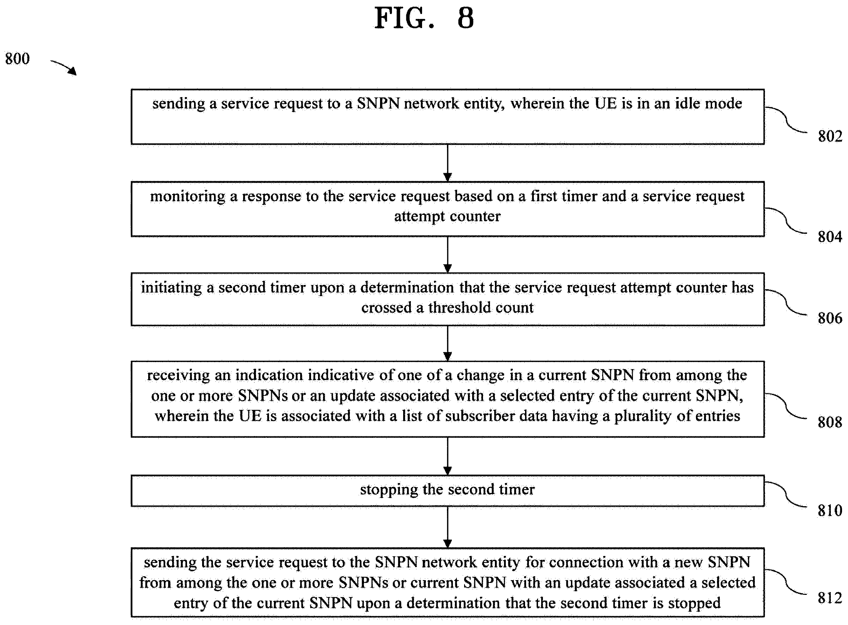

**FIG. 8** illustrates a method flow chart depicting a method 800 for handling session establishment procedure of UE (for instance, UE 404) with one or more SNPNs, in accordance with embodiments of the present disclosure. The method 800 may be performed at (e.g., by) the UE 404. The method 800 may be performed by the system 450 comprising the processor 420 and the memory 424 of the UE 404.

The method shown in FIG. 8 begins at block 802. At block 802, the method 800 comprises sending by the UE, a service request to a SNPN network entity. The UE may be in the idle mode.

At block 804, the method 800 comprises monitoring a response to the service request based on a first timer and a service request attempt counter. In embodiments, monitoring the response to the service request comprises initiating a first timer in response to sending the service request. Further, the method comprises upon a determination that no response is received from the SNPN network entity at an expiry of the first timer, restarting the first timer and incrementing the service request attempt counter. Further, the method comprises repeating the monitoring for a pre-defined (or alternatively, given) number of times (e.g., by incrementing a service request attempt counter) corresponding to the threshold count.

At block 806, the method 800 comprises initiating a second timer upon a determination that the service request attempt counter has crossed the threshold count (e.g. in response to determining that the request attempt counter has been incremented a number of times equal to or greater than the threshold count).

At block 808, there is a change in a current SNPN from among the one or more SNPNs indicative through receiving a cell indication or an update associated with a selected entry of the current SNPN. In particular, at block 808, the method 800 may comprise receiving a cell indication indicative of one of a change in a current SNPN from among the one or more SNPNs or an update associated with a selected entry of the current SNPN. The UE is associated with a list of subscriber data having a plurality of entries.

At block 810, the method 800 comprises stopping the second timer.

At block 812, the method 800 comprises sending the service request to the SNPN network entity for connection with a new SNPN from among the one or more SNPNs or current SNPN with an update associated a selected entry of the current SNPN upon a determination that the second timer is stopped.

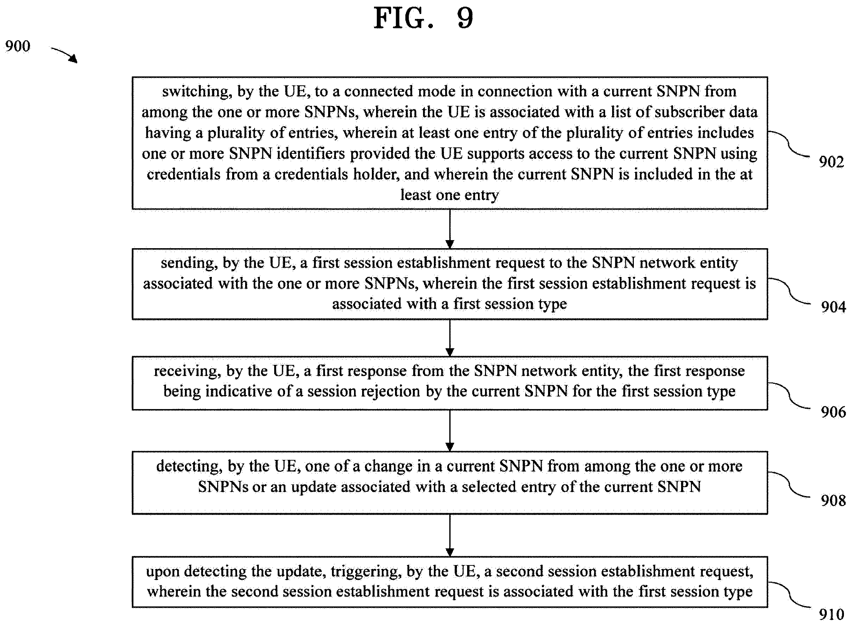

**FIG. 9** illustrates a method flow chart depicting a method 900 for handling session establishment procedure of UE (for instance, UE 404) with one or more SNPNs, in accordance with embodiments of the present disclosure. The method 900 may be performed at the UE 404. The method 900 may be performed by the system 450 comprising the processor 420 and the memory 424 of the UE 404.

At block 902, the method 900 comprises switching, by the UE, to a connected mode in connection with a current SNPN from among the one or more SNPNs. The UE is associated with a list of subscriber data having a plurality of entries. At least one entry of the plurality of entries includes one or more SNPN identifiers provided the UE supports access to the current SNPN using credentials from a credential holder. The current SNPN is included in the at least one entry.

At block 904, the method 900 comprises sending, by the UE, a first session establishment request to the SNPN network entity associated with the one or more SNPNs, wherein the first session establishment request is associated with a first session type.

At block 906, the method 900 comprises receiving, by the UE, a first response from the SNPN network entity, the first response being indicative of a session rejection by the current SNPN for the first session type.

At block 908, the method 900 comprises detecting, by the UE, one of a change in a current SNPN from among the one or more SNPNs or an update associated a selected entry of the current SNPN.

At block 910, the method 900 comprises upon detecting the update, triggering, by the UE, a second session establishment request. The second session establishment request is associated with the first session type.

In embodiments, the method 900 further comprises upon detecting the change in the current SNPN, sending, by the UE, the second session establishment request to a new SNPN from among the one or more SNPNs. The second session establishment request is associated with the first session type rejected by the current SNPN.

In embodiments, the method 900 further comprises upon detecting the update (e.g. change) associated with the selected entry of the registered SNPN, sending, by the UE, the second session establishment request to the current SNPN. The second session establishment request is associated with the first session type rejected by the current SNPN.

While the above discussed blocks (e.g., operations) in FIGS. 8-9 are shown and described in a particular sequence, the operations may occur in variations to the sequence in accordance with embodiments. Further, a detailed description related to the various operations of FIGS. 8-9 is already covered in the description related to FIGS. 4-7 and is omitted herein for the sake of brevity.

The presently disclosed systems and methods ensure that the UE is able to attempt PDU session establishments of desired types on change to a new SNPN or an update in SNPN parameters in the list of subscriber data associated with current SNPN irrespective of the results of the previous PDU establishment request (when in connected mode) or the results of the previous service requests (when in idle mode and failed for threshold count). Accordingly, the UE is enabled to avail services from the SNPNs and the scenarios where UE would be without required (or requested) services are eliminated (or reduced), thereby preventing (or reducing) delays in requesting services and preventing (or reducing) no service scenarios.

Existing devices and methods for establishing Packet Data Unit (PDU) sessions with Stand-along Non-Public Networks (SNPNs) perform signaling to establish the sessions as specified in the 3GPP specification. However, in some scenarios, the signaling specified in the 3GPP specification leads to excessive delay in establishing the sessions. For example, according to a first type of scenario, an SNPN network entity may fail to respond to a service request a threshold number of times. In this first type of scenario, the existing devices and methods are unable to send further services requests while a certain timer runs, even if circumstances have changed (e.g., a current SNPN has changed or an entry associated with a current SNPN has been updated), resulting in excessive delay in establishing a session. Also, according to a second type of scenario, the SNPN network entity may indicate that only a certain session type is allowed in response to an initial request. In this second type of scenario, the existing devices and methods are unable to send further requests for any session type other than the certain session type, even if circumstances have changed (e.g., a current SNPN has changed or an entry associated with a current SNPN has been updated) until one or more conditions are satisfied, resulting in excessive delay in establishing a session. The excessive delay experienced by the existing devices and methods reduces access to desired services via the SNPN.

However, according to embodiments, improved devices and methods are provided for establishing PDU sessions with SNPNs. For example, in response to detecting a scenario in which the signaling specified in the 3GPP specification leads to excessive delay in establishing the sessions, the improved devices and methods may override (or deviate from) the signaling specified in the 3GPP specification to establish PDU sessions with SNPNs more quickly. In response to detecting the first type of scenario, for instance, the improved devices and methods may stop the certain timer and send another service request in the event that the circumstances have changed (e.g., a current SNPN has changed or an entry associated with a current SNPN has been updated), thereby reducing delay in establishing a session. Additionally or alternatively, in response to detecting the second type of scenario, the improved devices and methods may send another request for a session type other than the certain session type in the event that the circumstances have changed (e.g., a current SNPN has changed or an entry associated with a current SNPN has been updated), thereby reducing delay in establishing a session. Accordingly, the improved devices and methods may overcome the deficiencies of the existing devices and methods to at least reduce delay in establishing a PDU session with an SNPN, thereby improving access to desired services via the SNPN.

According to embodiments, operations described herein as being performed by the communication environment 400, the SNPN network entity 402, the UE 404, the one or more processors 410, the communication unit 412, the one or more processors 420, the communication unit 422, the application unit, the NR-NAS unit, the NR-RRC unit, and/or the New-Radio SNPN network unit may be performed by processing circuitry. The term `processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 414 and/or the memory 424). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments disclosed herein may be implemented through at least one software program running on at least one hardware device and performing network management functions to control the elements. The elements may be at least one of a hardware device, or a combination of hardware device and software module.

While specific language has been used to describe the disclosure, any limitations arising on account of the same are not intended. As would be apparent to a person in the art, various working modifications may be made to the method in order to implement the inventive concepts as taught herein.

The drawings and the forgoing description give examples of embodiments. Those skilled in the art will appreciate that one or more of the described elements may well be combined into a single functional element. Alternatively, certain elements may be split into multiple functional elements. Elements from one example may be added to another example. For example, orders of processes described herein may be changed and are not limited to the manner described herein.

Moreover, the actions (or operations) of any flow diagram need not be implemented in the order shown; nor do all of the acts (or operations) necessarily need to be performed. Also, those acts (or operations) that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to challenges have been described above with regard to specific examples. However, the benefits, advantages, solutions to challenges, and any component(s) that may cause any benefit, advantage, or solution to occur or become more pronounced are not to be construed as a critical, required, or essential feature or component of any or all the claims.

The foregoing description of the specific examples will so fully reveal the general nature of embodiments herein that others may, by applying current knowledge, readily modify and/or adapt for various applications such specific examples without departing from the generic concept, and, therefore, such adaptations and modifications should and are intended to be comprehended within the meaning and range of equivalents of the disclosed examples. It is to be understood that the phraseology or terminology employed herein is for the purpose of description and not of limitation. Therefore, while embodiments herein have been described in terms of at least one example, those skilled in the art will recognize that the examples herein may be practiced with modification within the scope of embodiments as described herein.

## Claims

1. A method of a user equipment, UE, for establishing a session with one or more Stand-alone Non-Public Networks, SNPNs, the method comprising:
first sending a service request to a SNPN network entity while the UE is in an idle mode;
monitoring a response to the service request based on a first timer and a service request attempt counter;
initiating a second timer in response to determining that the service request attempt counter exceeds a threshold count;
receiving an indication indicative of one of
a change in a current SNPN from among the one or more SNPNs, or
an update associated with a selected entry of the current SNPN, the UE being associated with a list of subscriber data having a plurality of entries;
stopping the second timer; and
second sending the service request to the SNPN network entity for connection with
a new SNPN from among the one or more SNPNs, or
the current SNPN with the update associated the selected entry of the current SNPN,
the second sending being performed in response to determining that the second timer has stopped, and the second sending being performed while the UE remains in the idle mode before the UE switches to a connected mode.

2. The method as claimed in claim 1, wherein the monitoring the response to the service request comprises:
initiating the first timer in response to the first sending the service request;
restarting the first timer and incrementing the service request attempt counter in response to determining that no response to the service request has been received from the SNPN network entity by an expiry of the first timer; and
repeating the initiating the first timer, the restarting and the incrementing a number of times corresponding to the threshold count.

3. The method as claimed in claim 1 or claim 2, further comprising:
switching, by the UE, to the connected mode in connection with a first SNPN from among the one or more SNPNs, at least one entry among the plurality of entries including one or more SNPN identifiers, and the first SNPN being included in the at least one entry;
sending, by the UE, a first session establishment request to the SNPN network entity associated with the one or more SNPNs, wherein the first session establishment request is associated with a first session type;
receiving, by the UE, a first response from the SNPN network entity, the first response being indicative of a session rejection by the first SNPN for the first session type;
detecting, by the UE, one of
a change in a connection with the first SNPN, or
an update associated with a selected entry of the first SNPN; and
triggering, by the UE, a second session establishment request in response to detecting the changing in the connection with the first SNPN, the second session establishment request being associated with the first session type.

4. The method as claimed in claim 3, wherein the triggering comprises:
sending, by the UE, the second session establishment request to a second SNPN from among the one or more SNPNs, the second SNPN being different from the first SNPN.

5. The method as claimed in claim 3, wherein the triggering comprises:
sending, by the UE, the second session establishment request to the first SNPN.

6. The method as claimed in any of claims 3-5, wherein the list of subscriber data is associated with one or more SNPN parameters, the one or more SNPN parameters including of one or more of:
an identifier associated with the UE;
UE Route Selection Policy rules;
an SNPN identity of the first SNPN;
default configured Network Slice Selection Assistance Information;
a user controlled prioritized list of preferred SNPNs;
a credentials holder controlled prioritized list of preferred SNPNs;
a credentials holder controlled prioritized list of Group IDs for Network Selection;
access control configurations; or
credentials for authentication and key agreement procedures.

7. The method as claimed in any of claims 3-6, further comprising:
receiving, by the UE, a second response from the SNPN network entity in response to the second session establishment request, the second response being indicative of a session acceptance associated with the first session type.

8. The method as claimed in any preceding claim 3-7, wherein:
the first session type is associated with one of
a Packet Data Unit, PDU, type, or
a Session and Service Continuity type; and
each of the first session establishment request and the second session establishment request is a PDU session establishment request.

9. A method of a user equipment, UE, for establishing a session with one or more Stand-alone Non-Public Networks, SNPNs, the method comprising:
switching, by the UE, to a connected mode in connection with a current SNPN from among the one or more SNPNs, the UE being associated with a list of subscriber data having a plurality of entries, at least one entry among the plurality of entries including one or more SNPN identifiers, and the current SNPN being included in the at least one entry;
sending, by the UE, a first session establishment request to a SNPN network entity associated with the one or more SNPNs, the first session establishment request being associated with a first session type;
receiving, by the UE, a first response from the SNPN network entity, the first response being indicative of a session rejection by the current SNPN for the first session type;
detecting, by the UE, one of
a change in the current SNPN from among the one or more SNPNs, or
an update associated with a selected entry of the current SNPN; and
triggering, by the UE, a second session establishment request in response to detecting the update associated with the selected entry, the second session establishment request being associated with the first session type.

10. The method as claimed in claim 9, wherein the triggering comprises:
sending, by the UE, the second session establishment request to a new SNPN from among the one or more SNPNs.

11. The method as claimed in claim 9, wherein the triggering comprises:
sending, by the UE, the second session establishment request to the current SNPN.

12. The method as claimed in any of claims 9-11, further comprising:
receiving, by the UE, a second response from the SNPN network entity in response to the second session establishment request, the second response being indicative of a session acceptance associated with the first session type.

13. A system of a user equipment, UE, for establishing a session with one or more Stand-alone Non-Public Networks, SNPNs, the system comprising:
processing circuitry configured to
switch the UE to a connected mode in connection with a current SNPN from among the one or more SNPNs, the UE being associated with a list of subscriber data having a plurality of entries, at least one entry among the plurality of entries including one or more SNPN identifiers, and the current SNPN being included in the at least one entry,
send a first session establishment request to a SNPN network entity associated with the one or more SNPNs, the first session establishment request being associated with a first session type,
receive a first response from the SNPN network entity, the first response being indicative of a session rejection by the current SNPN for the first session type,
detect one of
a change in the current SNPN from among the one or more SNPNs, or an update associated with a selected entry of the current SNPN, and
trigger a second session establishment request in response to detecting the update associated with the selected entry, the second session establishment request being associated with the first session type.

14. The system as claimed in claim 13, wherein the processing circuitry is configured to:
trigger the second session establishment requesting including sending the second session establishment request to a new SNPN from among the one or more SNPNs.

15. The system as claimed in claim 13, wherein the processing circuitry is configured to:
trigger the second session establishment requesting including sending the second session establishment request to the current SNPN.
